# EUROPEAN PATENT APPLICATION

(11) **EP 2 108 670 A1**
(43) Date of publication of application: **14.10.2009**
(21) Application number: 08013350.7
(22) Date of filing: 24.07.2008
(51) Int. Cl.: C08G 18/48, C08G 18/76

(54) **Method of preparing MDI-based polyurethane foam**

(30) Priority: 09.04.2008 TW 97112914
(71) Applicant: Chang, Cheng-Chieh, Fenyuan Township Changhua County 502 (TW); Chang, Chin-Bing, Miaolil City Miaoli County 360 (TW)
(72) Inventor: Chang, Cheng-Chieh, Fenyuan Township Changhua County 502 (TW); Chang, Chin-Bing, Miaolil City Miaoli County 360 (TW)
(74) Representative: Straus, Alexander

(57) **Abstract**

Disclosed is a method of preparing MDI-based polyurethane polymer having a density in a range of between 25 and 80 kg/m³. The method includes the steps of a) mixing a first main raw material including methylene diphenyl diisocyanate polymer and carbonized methylene diphenyl diisocyanate, a second main raw material including 5 to 20 parts by weight of polyether polyol having a molecular weight of 3000 and 95 to 80 parts by weight of polyether polyol having a molecular weight of 5000, and an auxiliary material including a catalyst, a foam control agent, a crosslinking agent, a chain extender and water, and b) foaming the mixture of step a). In step a), the ratio by weight of the first main raw material to the second main raw material is in a range of 1:1.2 to 1:2.

## Description

### BACKGROUND OF THE INVENTION

### 1. Field of the Invention

The present invention relates generally to a method of preparing polyurethane polymer and more particularly, to a method of preparing MDI-based polyurethane polymer having a density in a range of between 25 and 80 kg/m³.

### 2. Description of the Related Art

It is well known that the basic materials for preparing polyurethane polymer contain isocyanate compound and polyol compound. For the isocyanate compound, toluene diisocyanate (TDI) and methylene diphenyl diisocyanate (MDI) are extensively used. Conventionally, the polyurethane polymer prepared from MDI has a density ranging from 80 and 150 kg/m³. Because the polyurethane polymer prepared from MDI has a high density and hardness, the application thereof is limited in certain areas. For example, it cannot be used as an upper piece or inner lining of a shoe product. On the other hand, the polyurethane polymer prepared from TDI has a relatively lower density and an appropriate hardness. However, it may cause environment pollution problem because the toxicity thereof is higher than that of MDI.

Therefore, it is desirable to provide a polyurethane polymer prepared from MDI and having a low density.

### SUMMARY OF THE INVENTION

The main objective of the present invention is to provide a method of preparing a MDI-based polyurethane polymer having a density in a range of between 25 and 80 kg/m³.

To achieve the aforesaid objective of the present invention, the method of preparing MDI-based polyurethane polymer comprises the steps of a) mixing a first main raw material, a second main raw material and an auxiliary material and b) foaming the mixture thus obtained in step a). The first main raw material includes methylene diphenyl diisocyanate polymer and carbonized methylene diphenyl diisocyanate. The second main raw material includes 5 to 20 parts by weight of polyether polyol having a molecular weight of 3000 and 95 to 80 parts by weight of polyether polyol having a molecular weight of 5000. The auxiliary material includes a catalyst, a foam control agent, a crosslinking agent, a chain extender and water. In addition, a ratio by weight of the first main raw material to the second main raw material is in a range of 1: 1.2 to 1:2 in step a).

Further, another feature of the present invention is characterized in that the first main raw material may further comprise liquid MDI.

### DETAILED DESCRIPTION OF THE INVENTION

The objective and features of the invention will be more fully understood from the following description of the invention and the claims appended hereto.

The present invention relates to a method of preparing polyurethane polymer having a density ranging from 25 to 80 kg/m³ by using the raw materials containing MDI. The method includes the steps of:
a) mixing a first main raw material including methylene diphenyl diisocyanate polymer and carbonized methylene diphenyl diisocyanate, a second main raw material including 5 to 20 parts by weight of polyether polyol having a molecular weight of 3000 and 95 to 80 parts by weight of polyether polyol having a molecular weight of 5000, and an auxiliary material including a catalyst, a foam control agent, a crosslinking agent, a chain extender and water, in which a ratio by weight of the first main raw material to the second main raw material is in a range of 1: 1.2 to 1:2; and
b) foaming the mixture obtained from step a).

The amounts of the methylene diphenyl diisocyanate polymer and carbonized methylene diphenyl diisocyanate contained in the first main raw material are not particularly limited. In addition, the first main raw material may further comprise liquid MDI.

As will be appreciated by those skilled in the art, the chain extender used in step a) is not particular limited. However, ethylene glycol can be used preferably.

Preferably, the auxiliary material comprises 0.4 to 6 parts by weight of the chain extender based on 100 parts by weight of the second main raw material.

Preferably, the auxiliary material comprises 1 to 7 parts by weight of the water.

The catalyst used in step a) is not specially limited. Preferably, the catalyst can be one selected from the group consisting of amine catalyst and metal catalyst. More preferably, the amine catalyst is used in an amount of 0.01 to 8 parts by weight, or the metal catalyst is used in an amount of 0.01 to 5 parts by weight.

The condition of mixing in step a) and the reaction condition of the foaming step are not particularly limited. They can be selected by a skilled person in the art in consideration of the process conditions.

The present invention is further explained in more detail with reference to the following examples. These examples, however, should not be interpreted as limiting the scope of the present invention in any manner.

### <Example 1>

A composition A was first prepared by mixing 15 g of polyether polyol (PPG, MW=3000) and 102 g of PPG (MW=5000) with 3.24 g of water, 0.18 g of metal catalyst (T9), 2.4 g of amine catalyst (A7), 4.2 g of ethylene glycol, 1.5 g of diethanolamine, 1.92 g of silicon, and an appropriate amount of a pore forming agent. A composition B was also prepared by mixing 11.4 g of liquid MDI, 39.9 g of MDI polymer and 62.7 g of carbonized MDI. And then, the composition A and the composition B were added into an agitation vat by appropriate equipment at a temperature of 25°C, and then were stirred rapidly at 6000 rpm for about 1.5 to 2.5 seconds. Finally, the mixture thus obtained was placed in a foaming tank to proceed with a foaming process.

### <Example 2>

A composition A was prepared by mixing 12 g of PPG (MW=3000) and 118 g of PPG (MW=5000) with 3.24 g of water, 0.18 g of metal catalyst (T9), 2.4 g of amine catalyst (A7), 4.2 g of ethylene glycol, 1.5 g of diethanolamine, 1.92 g of silicon, and an appropriate amount of a pore forming agent. A composition B is prepared by mixing 51.3 g of MDI polymer and 62.7 g of carbonized MDI. And then, the composition A and composition B were stirred at substantially the same condition of Example 1. Finally, the mixture thus obtained was placed in a foaming tank to proceed with the foaming process.

### <Example 3>

A composition A was prepared by mixing 24 g of PPG (MW=3000) and 96 g of PPG (MW=5000) with 3.24 g of water, 0.18 g of metal catalyst (T9), 2.4 g of amine catalyst (A7), 4.2 g of ethylene glycol, 1.5 g of diethanolamine, 1.92 g of silicon, and an appropriate amount of a pore forming agent. A composition B was prepared by mixing 5.7 g of liquid MDI, 45.6 g of MDI polymer and 62.7 g of carbonized MDI. And then, the composition A and composition B were stirred at substantially the same condition of Example 1. Finally, the mixture thus obtained was placed in a foaming tank to proceed with the foaming process.

The physical properties such as hardness, density, elongation ratio and tensile strength of the product obtained by Examples 1 to 3 were measured and are shown in Table 1.

**[Table 1]**

| classification | Properties | | | |
|---|---|---|---|---|
| | Hardness (Asker F) | Density (kg/m³) | Elongation Ratio | Tensile Strength (kg/m²⁾ |
| Example 1 | 80 | 60 | > 120% | 1.2 |
| Example 2 | 35 | 30 | > 120% | 1.5 |
| Example 3 | 50 | 45 | > 120% | 1.0 |

Table 1 shows that the method provided by the present invention can produce a polyurethane polymer having a density within the range of 25-80 kg/m³ even though the MDI is used as a raw material thereof.

## Claims

1. A method of preparing MDI-based polyurethane polymer having a density in a range of between 25 and 80 kg/m³, **characterized in that** the method comprises the steps of:
a) mixing a first main raw material including methylene diphenyl diisocyanate polymer and carbonized methylene diphenyl diisocyanate, a second main raw material including 5 to 20 parts by weight of polyether polyol having a molecular weight of 3000 and 95 to 80 parts by weight of polyether polyol having a molecular weight of 5000, and an auxiliary material including a catalyst, a foam control agent, a crosslinking agent, a chain extender and water; and
b) foaming the mixture of step a);
wherein a ratio by weight of the first main raw material to the second main raw material is in a range of 1: 1.2 to 1:2 in step a).

2. The method as claimed in claim 1, **characterized in that** the first main raw material further comprises liquid methylene diphenyl diisocyanate.

3. The method as claimed in claim 1, **characterized in that** the chain extender is ethylene glycol.

4. The method as claimed in claim 3, **characterized in that** the auxiliary material comprises 0.4 to 6 parts by weight of the chain extender based on 100 parts by weight of the second main raw material.

5. The method as claimed in claim 4, **characterized in that** the auxiliary material comprises 1 to 7 parts by weight of the water.

6. The method as claimed in claim 3, **characterized in that** the catalyst is one selected from the group consisting of amine catalyst and metal catalyst.

7. The method as claimed in claim 6, **characterized in that** the amine catalyst is in an amount of 0.01 to 8 parts by weight.

8. The preparation method as claimed in claim 6, **characterized in that** the metal catalyst is in an amount of 0.01 to 5 parts by weight.
